# EUROPEAN PATENT APPLICATION

(11) **EP 1 944 889 A2**
(43) Date of publication of application: **16.07.2008**
(21) Application number: 08100125.7
(22) Date of filing: 04.01.2008
(51) Int. Cl.: H04H 60/04

(54) **Mixing system for a portable media device**

(30) Priority: 05.01.2007 US 650373
(71) Applicant: Belkin International, Inc., Compton, CA 90220 (US)
(72) Inventor: Duncan Seil, Oliver, Pasadena, NY 91104 (US); Jackson, Scott, Rochester, NY 14610 (US); Lane, Steve, Orange, CA 92867 (US); Quinteros, Ernesto, Los Angeles, CA 90038 (US); Neu, Thorben, Hollywood, CA 90038 (US); Reay, Robert, Rochester, NY 14609 (US)
(74) Representative: Lawrence, John

(57) **Abstract**

An audio mixer (100) for a portable media device (114) includes: (a) an audio receiving mechanism capable of receiving audio signals from a plurality of components of a user's media system, modifying the characteristics of the received audio signals, summing the modified audio signals into a master audio signal, and outputting the master audio signal to a portable media device to be saved to the portable media device as a recording; (b) a docking station (449) to receive a portable media device; and (c) a portable media device operating system.

## Description

### FIELD OF THE INVENTION

This invention relates generally to accessories for portable media devices, and relates more particularly to audio mixing systems for use with portable media devices.

### BACKGROUND OF THE INVENTION

Music is often played and/or recorded using a device commonly referred to as an audio mixer. An audio mixer is capable of receiving audio signals (input signals) from two or more devices that produce audio signals and outputting audio signals (output signals) to one or more audio devices, such as speakers. An audio mixer may include mechanisms to adjust the characteristics of the received audio signals, including mechanisms to adjust gain, to equalize the high, mid and low ranges of the signals, to pan a stereo signal between the left and right signals, and to adjust the volume (or level) of the signals. The individual audio signals, having been manipulated by the mechanisms as described above, are then summed into a summed audio signal. The summed audio signal can be further adjusted by a mechanism, such as a compressor mechanism and/or a volume control mechanism to create an audio signal output. The mechanisms described above are linked to controls accessible by a user of the mixer, who can manipulate the controls to achieve the desired audio signal output. The audio signal output can be outputted to one or more devices for listening and/or recording.

Audio mixers are widely available, and examples include the BOSS^{®} BR1600CD Digital Recorder and Mixer, the Roland^{®} M-10E 10-channel 5-stereo Mixer, the TASCAM^{®} 414mkII Portastudio^{™} mixer and recorder, and the TASCAM^{®} DP-01FX/CD mixer and digital recorder, the features and specifications of which are widely available and known to those with ordinary skill in the art, and incorporated herein by this reference.

Similarly, video signals can be mixed by a video mixer, with the altered signal then output for viewing and/or recording. For example, the Roland^{®} V-1 is a 4-channel video mixer.

Recently, portable media devices, capable of handling digital audio files in one or more file formats, have become very popular for their compact size and large storage capacity. Several formats for digital audio files exist, each offering its own combination of sound quality, compression rate, streaming capability, and other features. Some of the existing file formats are: AAC ("advanced audio coding"), ATRAC ("adaptive transform acoustic coding), MP3 (mpeg-1 audio layer 3), AIFF (audio interchange file format), WMA (Windows^{®} media audio), OGG (Ogg Vorbis), and WAV (waveform audio format), but this list is not an exhaustive one. Also, many portable media devices can playback video files in different formats, such as AVI (advanced video interleave) and MPEG-1 (moving picture experts group initial video and audio compression standard). For example, portable media devices sold under the trademark iPod by Apple Computer, Inc. of Cupertino, California, are widely sold with this capability. Portable media devices capable of playing digital audio files, and of storing them in large numbers, are often referred to as MP3 players because of the popularity of that particular file format.

Traditionally, portable media devices have been able to playback only those audio files uploaded from a computer and stored in the storage system of the portable media device in one of aforementioned file formats. Additionally, until recently, portable media devices have not included mechanisms to allow recording of music or sounds onto the portable media device, nor have they provided support for external audio receiving devices. However, newer models of portable media devices, such as an Apple^{®} iPod^{®} device, and other portable media devices, provide increased support for external devices, including devices to record sounds onto the portable media device.

Devices have been created that take advantage of some of the recording features of portable media devices, including, for example, the audio mixing system for an MP3 player described in U.S. Patent Application No. 11/472,098, incorporated herein in its entirety by this reference.

However, the capacities of these devices are limited. A user of a portable media device may have an extensive media system. For example, a user may have available to him or her a media system that may include one or more instruments capable of generating sounds that can be converted into electrical (or audio) signals, such as one or more electric guitars, bass guitars, acoustic guitars, keyboards, microphones, synthesizers, and the like, and/or video signals, such as a video recorder. A user's media system may also include audio and/or video signals recorded on compact discs, digital video discs, records, cassettes, one or more computers and the like. A user may also have available to him or her, as part of his or her media system, programs, such as programs capable of being run on a computer, that permit manipulation of audio and/or media signals. The number and types of signals that can be input into the devices is limited, and the ability of the devices to permit full integration of the functionalities of a portable media device into a user's media system is limited. Thus, a need exists for an apparatus or system that is capable of permitting a user to integrate the functionalities of one or more portable media devices with one or more components of his or her media system. Other needs or potential benefits of such an apparatus or system may be apparent from this disclosure.

Portable media devices typically include a screen that displays information to the user regarding various features and/or functionalities of the device. Such portable media devices will frequently include a feature that causes the screen to light, commonly called a "backlight," that permits better visibility of information displayed on the screen. To conserve energy, particularly battery life, the backlight typically remains lit for a relatively short period of time, often adjustable by a user. However, in some applications, when the portable media device is electrically coupled to an apparatus, it would be useful for the backlight to remain lit for a longer period of time, without the need to turn it back on when it goes off and/or reprogram the period of time for which it is to remain lit. Therefore, a need or potential for benefit exists for a feature associated with the apparatus to which the portable media device is coupled to cause the backlight to remain on while the portable media device remains coupled to the apparatus.

A typical portable media device, such as an Apple^{®} iPod^{®} device, includes controls on the face of the device (such as controls located on a touch screen and/or a control wheel) that are manipulated, while not exclusively, most conveniently by the user's thumb. Controls designed to be operated by a user's thumb are easier to use if the user's other fingers can be conveniently placed behind the user's thumb such that, if the portable media device were not disposed between the thumb and fingers, the pad of the thumb would touch some part of the palm-side portion of the user's fingers. Such configuration of thumb and fingers is sometimes referred to herein as the "preferred operating hand position." Of course, when a user is manipulating the controls of a portable media device with his or her thumb, and when the portable media device is not resting on a surface, disposed within a docking station or otherwise supported, the preferred operating hand position is also preferred because it allows the user to grip the portable media device. Nevertheless, even if a portable media device is fully supported, for example, by a docking station, it continues to be preferable to operate the controls of the portable media device using the preferred operating hand position. Therefore, a need exists for a docking station for a portable media device that permits the user to operate the controls of the portable media device using the preferred operating hand position.

### BRIEF DESCRIPTION OF THE DRAWINGS

The invention will be better understood from a reading of the following detailed description, taken in conjunction with the accompanying Figures in the drawings in which:
**FIG. 1** is a block diagram of an audio mixer for use with a portable media device according to an embodiment of the invention;
**FIG. 2** is a front, right, top isometric view of the audio mixer of FIG. 1, according to an embodiment of the invention;
**FIG. 3** is a rear, left, top isometric view of the audio mixer of FIG. 2 according to an embodiment of the invention;
**FIG. 4** illustrates a first menu on a screen of a portable media device for use with the audio mixer of FIG. 1 according to an embodiment of the invention;
**FIG. 5** illustrates a second menu on a screen of a portable media device for use with the audio mixer of FIG. 1 according to an embodiment of the invention;
**FIG. 6** is a flow chart illustrating a method of using an audio mixer according to an embodiment of the invention;
**FIG. 7** illustrates a front, right, top isometric view of the audio mixer of FIG. 7, according to an embodiment of the invention, coupled to a portable media device;
**FIG. 8** is a flowchart illustrating the steps required to access the recording menu of a portable media device for use with the audio mixer of FIG. 1 according to an embodiment of the present invention; and
**FIG. 9** is a rear, left, bottom view of the audio mixer of FIG. 2, according to an embodiment of the invention.

For simplicity and clarity of illustration, the drawing figures illustrate the general manner of construction, and descriptions and details of well-known features and techniques may be omitted to avoid unnecessarily obscuring the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Furthermore, the terms "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical, mechanical, or other manner. For example, a first mechanism electrically coupled to a second mechanism may be directly connected or may be indirectly connected via a conductor coupled to the first and second mechanisms that operates to transmit signals from the first mechanism to the second mechanism. The term "secured," as used herein, is defined as firmly attaching, joining, fixing, fastening, or connecting one item to another item (in a removable or nonremovable) manner, either directly or via one or more intermediate items secured to the items described as "secured" to one another in a manner appropriate for the specific items.

### DETAILED DESCRIPTION OF THE DRAWINGS AND EXAMPLES OF EMBODIMENTS

A mixer is particularly (although not exclusively) suited to allow integration of the functionalities of one or more portable media device with one or more components of a user's media system. Therefore, a preferred embodiment of an apparatus or system of the present invention is a mixer for use with a portable media device and one or more components of a user's media system. Such a mixer allows a user to more fully integrate the functionalities of one or more portable media device with one or more components of his or her media system. Certain embodiments of such a mixer (or other apparatus or system for use with a portable media device) include controls and/or features that simplify use of a portable media device as a component of a media system. For example, a preferred embodiment includes one or more of (a) a recording menu access control, (b) an authenticated recording feature, and/or (c) a backlight toggle control.

In an example of an embodiment of the invention, an audio mixer for a portable media device includes: (a) an audio receiving mechanism capable of receiving audio signals from a plurality of components of a user's media system, modifying the characteristics of the received audio signals, summing the modified audio signals into a master audio signal, and outputting the master audio signal to the portable media device to be saved to the portable media device as a recording; (b) a docking station to receive the portable media device; and (c) a portable media device operating system.

In another embodiment of the invention, an apparatus for use with a portable media device includes: (a) an interface configured to be plugged into and electrically coupled to the portable media device that provides a way of communicating between the apparatus and the portable media device; (b) a processor, in communication with the apparatus and the portable media device, capable of causing the backlight of the portable media device to remain on while the portable media device remains coupled with the apparatus; and (c) a backlight toggle control, in communication with the processor.

In yet another embodiment of the invention, an apparatus for use with a portable media device includes a docking station, wherein the docking station includes: (a) a receiving port configured to accept a portable media player, and (b) a cavity below the receiving port, an opening of which is aligned with the front face of the portable media device disposed within the receiving port, and which permits a user of the apparatus to operate the controls of the portable media device using the preferred operating hand position while the portable media device remains within the receiving port.

Certain embodiments of an apparatus or system of the present invention include mixers for use with a portable media device. A mixer allows a user to integrate the functionalities of one or more portable media devices with one or more components of his or her media system in a new and useful manner. Such a mixer permits a user to, for example, manipulate and sum signals, such as audio signals, produced by one or more components of his or her media system, such as musical instruments, save the signals produced by the mixer to a portable media device as a recording (preferably, an authenticated recording) and, simultaneously, sense the signals produced by the mixer, for example, by listening to audio signals through speakers.

The usefulness of an apparatus or system, such as a mixer, of an embodiment of the present invention is increased if it includes an authenticated recording feature, as described below.

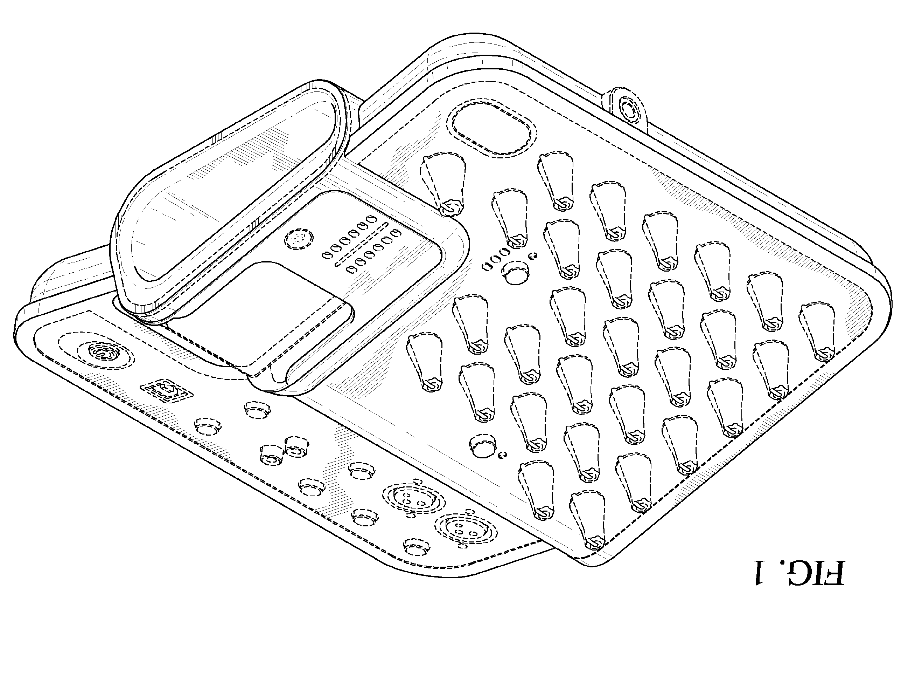

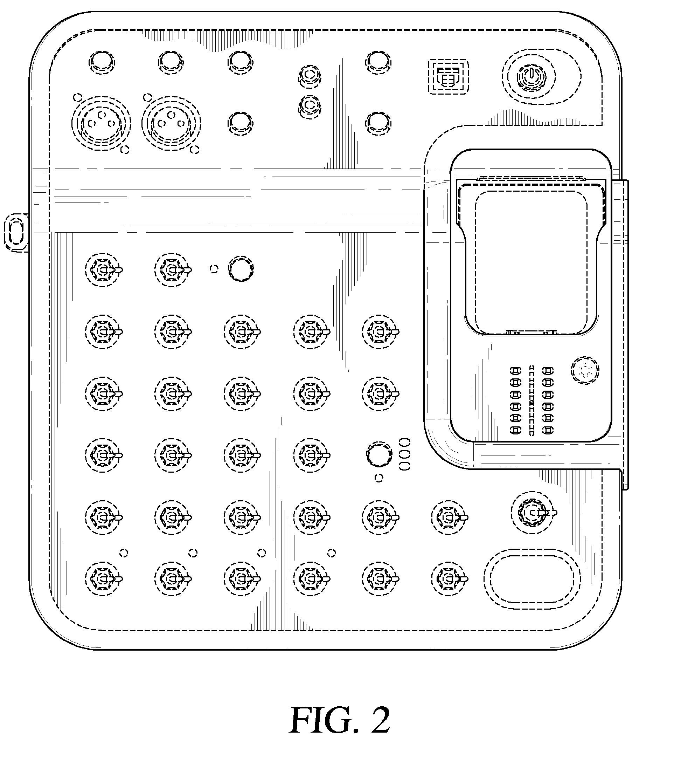

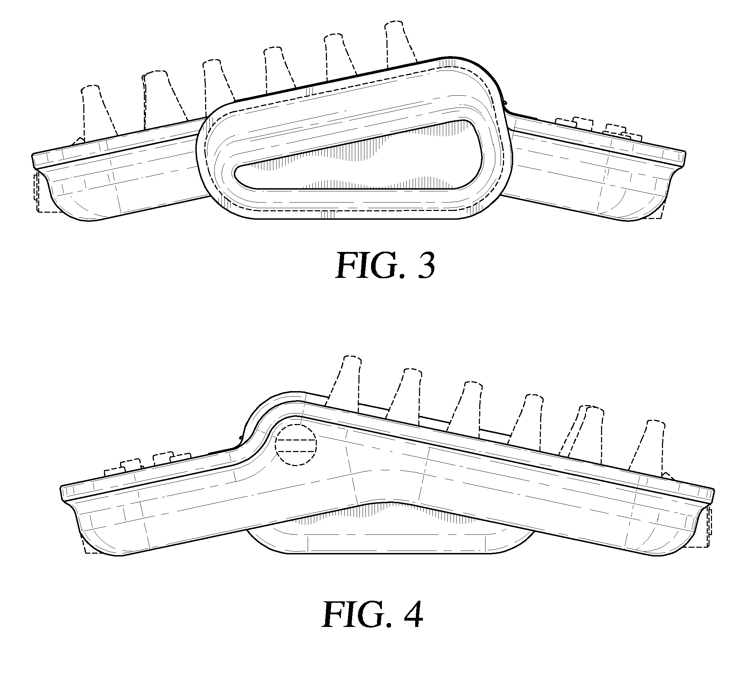

**FIG. 1** is a block diagram of an audio mixer **100** for a portable media device **114,** according to one embodiment of the present invention. It will be understood by those with ordinary skill in the art that there are numerous possible embodiments of apparatuses or systems (including but not limited to mixers) of the present invention and that the embodiment illustrated and described below is merely exemplary. In this example, the mixer **100** includes: a first channel **102,** a second channel **104,** a third channel **106,** a fourth channel **108,** a USB (universal serial bus) interface **110,** and a portable media device operating system **112.** Preferably, some portion or all of such components are enclosed within a housing 101, an example of which is illustrated in **FIG. 2** and **FIG. 3****.**

The portable media device operating system **112** facilitates communication and transfer of power and signals between the portable media device **114** and the mixer **100.** In the embodiment illustrated in **FIG. 1****,** the portable media device operating system **112** comprises an interface **250** which is configured to be electrically coupled to the portable media device **114.** The interface **250** can transfer communication, power and audio signals between the mixer **100** and the portable media device **114.** In one embodiment, the interface **250** includes a connector **500 (****FIG. 3****)**. The type of connector **500** depends on the type of connector of the portable media device **114** (or devices) the mixer **100** is designed to accept. For example, the interface **250** can include a thirty-pin male serial connector **500** configured to be plugged into and electrically coupled to an Apple^{®} iPod^{®} device. In another example, the portable media device **114** has a female USB connector for coupling with external devices. Then, the connector **500** would be a male USB connector.

In a preferred embodiment of the mixer **100,** the portable media device operating system **112** further comprises a processor **252,** which controls communications between the portable media device **114** and the mixer **100,** via the interface **250.** Such communications are sent to the processor **252** from the interface **250** over the conductor **254.** The conductor **254** can include one or more individual conductors. In one embodiment, the processor **252** is a microcontroller. For example, the processor **252** can be an eight bit microcontroller sold under the trademark PSOC by Cypress of San Jose, California, or an eight bit microcontroller sold under the trade name C8051F331 or C8051F333 by Silicon Laboratories of Austin, Texas. The portable media device operating system **112** can also include separate hand shaking (or authentication) circuitry **253,** if required by the portable media device **114.**

In some embodiments, certain functions of the portable media device **100** are controlled by the user through the portable media device **114.** As an example, a menu system on a screen **115** of the portable media device **114** can be used by the user to begin recording, delete previous recordings, stop recording, enable or disable the automatic gain control, select the recording mode (mono or stereo), set recording quality, begin playing, stop playback, etc. To the extent necessary or desirable for the function of the mixer **100,** information regarding the instructions from the portable media device **114** is passed through the interface **250** to the processor **252.** In some embodiments, one or more functions of the mixer **100** can be controlled by the user through the portable media device **114** such as, for example, selections to enable or disable the automatic gain control and/or select the recording mode. The processor **252** then implements the instructions from the user.

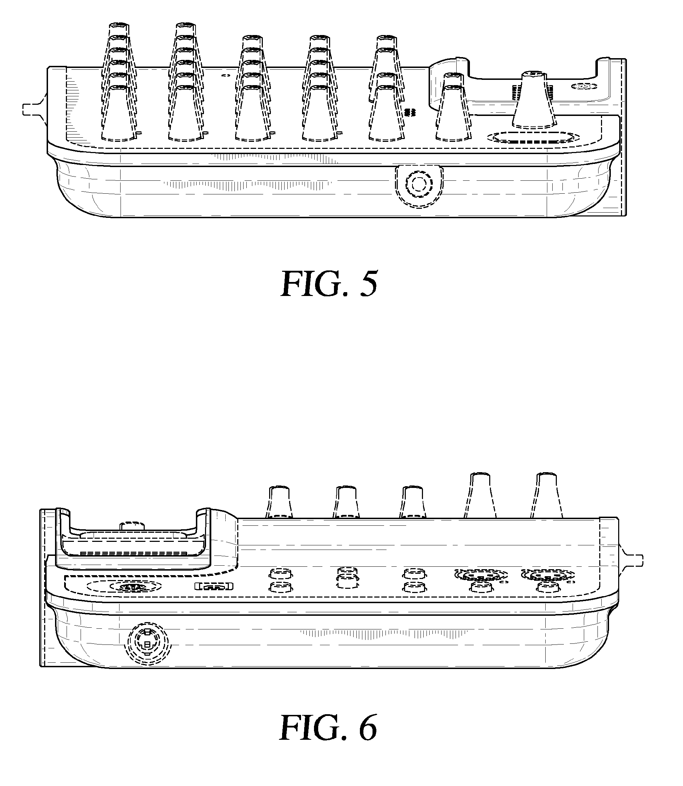

**FIG. 4** and **FIG. 5** illustrate examples of menus on a screen **115** of a portable media device **114** for use with the mixer **100.** In **FIG. 4****,** menu **300** on screen **115** allows a user to begin recording audio signals or change the quality of the audio file to be recorded. If the user highlights "Record Now" on menu **300** by using a flywheel **302** and clicks a button on the flywheel **302,** the portable media device **114** can begin to record an output signal from the mixer **100** and send a signal to the processor **252 (****FIG. 1****)** informing the mixer **100 (****FIG. 1****)** that the portable media device **114** has begun to record the output signal of the mixer **100.** If the user highlight and clicks on "Quality," the user can change the quality of the audio recording.

In one embodiment, after the mixer **100** has begun recording signals onto the portable media device **114,** the portable media device **114** displays menu **304** on screen **115,** as shown in **FIG. 5****.** Menu **304** displays the recording time and gives the user the option to "Pause" and "Stop and Save" the recording process. If the user highlights either of these options using flywheel **302** and clicks a button on the flywheel **302** to select the option, a signal is sent from the portable media device **114** to the processor **252 (****FIG. 1****)** informing the mixer that the portable media device **114** has stopped recording. If the user had selected "Pause," another menu is displayed to the user to allow the restarting or stopping of the recording process. If the user selected "Stop and Save," the recording process is stopped, and the audio recording is saved in the memory of the portable media device **114.** In another embodiment, another menu is displayed to allow the user to decide whether to save the recording, discard or playback the recording.

Preferably, the portable media device operating system **112** is designed to interact with the portable media device **114** such that any such recording saved in the memory of the portable media device **114** is saved in a manner that causes the recording to be recognized by the portable media device **114** as a file capable of being played by the portable media device **114,** without further manipulation of such file (an "authenticated recording"). Thus, preferably, a user, having saved a recording to a portable media device **114** can, optionally, proceed immediately to access a list of files available on the portable media device **114** using, for example, controls of the portable media device **114** accessible by the flywheel **302** on the portable media device **114,** which list will include the authenticated recording, and select such authenticated recording to be played by the portable media device **114.** This functionality of the mixer 100 with the authenticated recording feature can be achieved, for example, by authentication circuitry **253** included in the portable media device operating system **112.**

There are numerous benefits to a mixer **100** that includes this feature (the "authenticated recording feature"). For example, a user can use the mixer **100** with the authenticated recording feature to create a first audio signal, save an authenticated recording of the first audio signal to a portable media device **114,** input the saved authenticated recording of the first audio signal into the mixer, sum the first audio signal of the saved authenticated recording with a second audio signal created by the mixer to create a third audio signal, and save the third audio signal to a computer, via the USB interface **110** or to another personal media device (not shown) coupled to the mixer.

In another embodiment, the user can control one or more of the functions listed above through controls located on the housing **101** and electrically coupled to the processor **252.** For example, in the mixer **100** illustrated in **FIG. 2****,** the portable media device operating system **112** includes a recording menu access control 256 locating on the housing **101** of the mixer **100** that allows a user to directly access the recording menu of a portable media device **114.** The recording menu access control **256** is coupled with the processor **252 (****FIG. 1****),** which allows communication to the portable media device **114** of commands initiated by the recording menu access control **256,** via the interface **250,** when activated by a user. **FIG. 8** illustrates the menu selections **900, 902, 904, 906, 908, 910,** and **912** which would be required by a user of a portable media device **114** for use with the mixer **100** to reach the recording menu **914.** In a preferred embodiment, the recording menu access control **256,** when activated, causes the menu of the portable media device to display automatically the recording menu **914,** bypassing the otherwise required selections of **900, 902, 904, 906, 908, 910,** and **912.** Recording is then initiated by selecting the record **914** option.

Preferably, the portable media device operating system **112** of the mixer **100** includes a backlight toggle control **258** located on the housing **101** of the mixer **100.** A backlight toggle control **258** allows a user of the mixer **100** to override the backlight settings of the portable media device **114.** Preferably, the backlight toggle control **258** allows a user to cause the backlight of the portable media device **114** to remain on while the portable media device **114** remains coupled to the mixer **100** or until the user engages the backlight toggle control **258** to turn off the backlight of the portable media device **114,** whichever occurs first. In the example of the mixer **100** illustrated in **FIG. 1** and **FIG. 2****,** the backlight toggle control **258** is coupled to the processor **252,** which allows communication to the portable media device **114,** via the interface **250** of commands initiated by the backlight toggle control **258** when activated by a user. In a preferred embodiment of the present invention, when the backlight toggle control **258** is engaged by a user to turn the backlight on, the processor **252** will communicate with the portable media device **114** via the interface **250,** to request the status of the backlight of the portable media device **114.** If the processor **252** receives a communication from the portable media device **114** that the backlight is off, the processor **252** will issue a command to the portable media device **114** to turn the backlight on. The processor **252** will continue to communicate with the portable media device **114** as is necessary to keep the backlight of the portable media device **114** on. If a user engages the backlight toggle control **258** of the mixer **100** to turn the backlight off, the backlight settings of the portable media device **114** will again determine whether or not the backlight is on.

As discussed above, it is typically desirable for a user to select a backlight setting for a portable media device that causes the backlight to remain on for a relatively short period of time, because such a setting will preserve battery life. However, in an apparatus or system for use with a portable media device, such as a mixer, the portable media device receives power from the apparatus or system, thereby reducing or eliminating the drain on the battery of the portable media device while the apparatus or system is powered and the portable media device remains coupled to the apparatus or system. Therefore, it will be understood by those with ordinary skill in the art that the backlight toggle control is useful for many apparatuses and systems for use with a portable media device, including but not limited to a mixer. Thus, embodiments of the present invention include other apparatuses and systems (not shown) for use with a portable media device that comprise a backlight toggle control.

It will be understood that the portable media device **114** is not, and need not be, a component of the mixer **100,** but is merely shown to facilitate understanding of such a mixer **100** and the way in which it may function. It will be further understood that a mixer can be configured to be coupled with and to communicate with more than one portable media device **114** at the same time or at different times.

It will be understood by one with ordinary skill in the art that mixers can comprise a variety of functions known in the art, and that circuitry necessary or desirable to achieve such functions are known in the art and need not be explained in detail. Nevertheless, returning to **FIG. 1****,** a brief explanation of certain aspects of such functions, and of certain non-limiting aspects of circuitry that can be employed to achieve such functions, illustrates the manner in which the mixer **100** significantly improves integration of the functionalities of one or more portable media device with one or more components of a user's media system.

In the illustrated embodiment, (a) a first channel **102** includes one or more inputs **116, 118,** which inputs may be input jacks, such as an XLR jack **116** and/or a ¼ inch jack **118,** to receive audio signals from a source, for example, a microphone, capacitors **120, 122,** a gain (or trim) mechanism **124,** equalization circuits **126,** a volume (or level) adjustment mechanism **128,** and a pan mechanism **130;** (b) a second channel **104** includes one or more inputs **132, 134,** which inputs may be input jacks, such as an XLR jack **132** and/or a ¼ inch jack **134,** to receive audio signals from a source, for example, a microphone, capacitors **136, 138** a gain (or trim) mechanism **140,** equalization circuits **142,** a volume adjustment mechanism **144,** and a pan mechanism **146;** (c) a third channel **106** includes one or more inputs **148, 150,** which inputs may be input jacks, such as two ¼ inch jacks **148, 150,** to receive audio signals from a source, for example, an electric keyboard, a mechanism **156** coupled with the circuit or circuits of one line of the channel input, for example, the left line, to split a mono signal into a stereo signal, differential amplifiers **152, 154,** equalization circuits **160,** a volume adjustment mechanism **162,** and a balance mechanism **164;** and (d) a fourth channel 108 includes one or more inputs **170, 172,** which inputs may be input jacks, such as two RCA jacks **170, 172,** to receive audio signals from a source, for example, a compact disc player, equalization circuits **174,** a volume adjustment mechanism **176,** and a balance mechanism **178.** It will be understood by one with ordinary skill in the art that the inputs, jacks, mechanisms, controls, and/or circuits of each channel are coupled in one or more manners known in the art, for example, via conductors, and that one or more nodes, switches, capacitors and the like may be included appropriately in the circuitry of a mixer (some of which may be illustrated on **FIG. 1****),** as is necessary or desirable to achieve the desired functions. Again, the general aspects of such circuitry are well known in the art and need not be fully described herein.

In the embodiment of the present invention illustrated in **FIG. 1****,** each channel **102, 104, 106, 108** further comprises a channel peak indicator **188, 190, 192, 194,** coupled with a light emitting diode ("LED") **180, 182, 184, 186** that will light if the output of the audio signal from the equalization circuit **126, 142, 160, 174** is within a specific range (for example, within 5-6dB [decibels]) of the circuit's clipping threshold.

It will be understood by one with ordinary skill in the art that a mixer need not include all of the features described above and/or could include addition features currently in use (or used in the future) in audio mixers not included in the illustrated embodiment. Furthermore, it will be understood inputs used to input signals into a mixer can include a variety of input jacks configured to accept a variety of plugs associated with sources of audio signals. In addition, it will be understood that audio signals could be input into a mixer by inputs other than input jack and plug, for example, by a wireless connection. Mixers can include any number of channels, any of which channels can be designed to accept mono signals, stereo signals, or both. In addition, mixers can receive and process video signals, either in addition to or exclusive of audio signals.

In a preferred embodiment of the present invention, illustrated on **FIG. 1** and **FIG. 2****,** one or more of the gain mechanisms **124, 140,** equalization circuits **126, 142, 160, 174,** the volume adjustment mechanisms **128, 144, 162, 176,** the pan mechanisms **130, 146,** and the balance mechanisms **164, 178** are adjustable by the user via potentiometers or other controls known in the art. For example, (a) rotary analog potentiometers **424, 426** coupled with gain mechanisms **124,140** permit a user to control the amount of pre-amplification applied to the audio signal input into a first channel **102** and a second channel **104;** (b) rotary analog potentiometers **400, 402, 404, 406, 408, 410, 412, 414, 416, 418, 420, 422** coupled with equalization circuits **126, 142, 160, 174** permit a user to control high (e.g., high shelving filter at 12kHz [kilohertz], +/-12dB), mid (e.g., peaking filter at 2.5kHz +/- 12dB), and low (e.g., low shelving filter at 80Hz [hertz] +/- 12dB) frequency ranges, (c) rotary analog potentiometers **428, 430, 432, 434** coupled with volume adjustment mechanisms **128, 144, 162, 176** permit a user to control the range of the signal flowing out of the volume adjustment mechanism in a range of silent to +15dB, (d) rotary analog potentiometers **436, 438** coupled with pan mechanism **130, 146** of first and second channels **102, 104** permit a user to pan the audio signal of each such channel in the range of entirely to the right to entirely to the left, and/or (e) rotary analog potentiometers **440, 442** coupled with balance mechanisms **164, 178** of third and fourth channels **106, 108** permit a user to adjust the outputted signal in a range of entirely the left signal to entirely the right signal. Although rotary potentiometers are shown in the embodiment of the present invention illustrated in FIG. 2, potentiometers can take other forms known in the art, such as sliders.

As illustrated by the embodiment of the present invention shown in **FIG. 1** and **FIG. 2****,** a mixer optionally includes a phantom power switch **200** on one or more circuits, for example, a first circuit 102, which, when activated by a user via a control, for example, a push button 444, will provide additional current to such circuit. For example, the phantom power switch 200, when connected, will provide +48VDC [volts of continuous current] +/-2V at 30mA [milliampere] max current. Such additional current is useful for proper operation of certain types of microphones, commonly called condenser microphones. Optionally, an indicator, such as an LED **168,** is coupled to the phantom power switch **200,** to indicate to the user whether the phantom power switch **200** has been activated.

In the embodiment of the mixer **100** illustrated in **FIG. 1****,** the right **208** and left **206** outputs of each channel **102, 104, 106, 108** receiving audio signal inputs, having been manipulated in the manner described above, are summed by summing mechanisms **202, 204** to create a first summed audio signal. The first summed audio signal is further manipulated by a stereo compressor **209** that operates to improve the audio quality of the first summed audio signal by adjusting the dynamic range of the first summed audio signal to create a compressed audio signal. In a preferred embodiment of the mixer **100,** the compressor is coupled with one or more indicators, such as LEDs, to provide information to a user regarding the amount of the dynamic compression applied to the first summed audio signal. For example, LEDs **210** coupled with the compressor **209** light red if the compression amount is more than 12dB, light orange if the compression amount is more than 6dB, and light yellow if the compression amount is more than 3dB. Preferably, the compressor **209** is adjustable by a user via one or more potentiometers or other controls known in the art. For example, in the embodiment of the mixer **100** illustrated on **FIG. 1** and **FIG. 2****,** the compressor **209.** functions of compressor ratio, threshold, and makeup gain are adjustable using a single rotary potentiometer **446.** As illustrated by the embodiment of the present invention shown in **FIG. 1** and **FIG. 2****,** the mixer optionally includes a compressor switch **212** which permits a user, via a control, for example, a push button **448,** to select whether the continuing audio signal is the first summed audio signal or the compressed audio signal. Optionally, an indicator, such as an LED **214,** is coupled to the compressor switch **212,** to indicate to the user whether the continuing audio signal is the first summed audio signal or the compressed audio signal.

A preferred embodiment of a mixer, such as the embodiment illustrated in **FIG. 1** and **FIG. 2****,** includes a USB interface **110,** coupled to a USB connector **216** which, when coupled with a computer or other digital receiver and/or source (not shown) via a USB cable (not shown), allows signals ("digital output signals"), such as audio or video signals, produced by the mixer to flow to a computer (or other digital receiver) and/or to allow the mixer to receive signals ("digital input signals"), such as audio or video signals, from a computer (or other digital source). If the USB interface **110** receives digital input signals, the USB interface **110** converts the digital input stream to analog. If the USB interface **110** outputs audio signals to a computer (or other digital receiver), the USB interface **110** converts the analog signal produced by the mixer to a digitized mixed audio stream to be output to the computer (or other digital receiver). Techniques and mechanisms for converting analog signals to digital signals, and vice versa, are well known in the art and need not be further described herein.

In a preferred embodiment of the mixer **100,** whether the USB interface **110** acts to send or accept signals is controlled by the computer to which the mixer **100** is coupled, in accordance with commands selected by the user, or otherwise; however, a processor, and controls for such processor, could be included in a mixer to allow initiation of such commands by the mixer. It will be understood by those with ordinary skill in the art that connectors other than USB connectors are available and may be suitable to couple an interface to a computer or other digital source or receiver, and that such connectors could be used in a mixer. For example, connections such as IEEE-1394 (also known as Firewire or iLink) connections could be employed, or the connection could be eliminated entirely.

In an embodiment of the mixer **100** that includes a USB interface **110,** as described above, said USB interface **110** is preferably coupled to a USB input level mechanism **218** to create the USB input audio signal. Preferably, the USB level input mechanism **218** is coupled with a control that allows a user to adjust the USB input audio signal. For example, a rotary analog potentiometer **450** is coupled with the USB input level mechanism **218** and permits a user to adjust the USB input audio signal in a range of silent to +15dB.

In the example of the mixer **100** shown on **FIG. 1****,** if an audio signal is received via a USB interface **110,** the USB input audio signal is summed with the continuing audio signal at a mix ratio mechanism **220** to create a second summed audio signal. Preferably, the mix ratio mechanism **220** is coupled with a control that allows a user to adjust the extent to which the second summed audio signal comprises each of the continuing audio signal and/or the USB input audio signal. For example, a rotary analog potentiometer **452** coupled with the mix ratio mechanism **220** permits a user to control whether the second summed audio signal will be entirely the continuing audio signal, entirely the USB input audio signal, or a mix of the two.

As described above, the USB interface **110** can operate to send audio signals to a computer or receive digital signals from a computer. The mixer **100** can also be used in a manner that permits the continuing audio signal to be output to a computer, via the USB interface **110,** to be processed by the computer (for example, by using an audio workstation processor), and then returned to the mixer **100,** via the USB interface **110.** The USB input audio signal is then summed with the continuing audio signal at a mix ratio mechanism **220.** However, by operating the potentiometer **452** coupled with the mix ratio mechanism **220,** a user can cause the second summed audio signal to be only the USB input audio signal (which, again, is the continuing audio signal, further processed by the computer, and returned to the mixer).

A user of the mixer **100,** who has used the USB interface **110** in the manner described above, could operate the potentiometer **452** coupled with the mix ratio mechanism **220** to cause the second summed audio signal to be a mix of the continuing audio signal and the USB input audio signal. With such a use, the USB audio input signal typically will be "delayed" in comparison to the continuing audio signal. While the delay between the continuing audio signal and the USB input audio signal may be undesirable in certain contexts, a user may find the effects of this delay to be pleasing and/or otherwise desirable in other contexts.

In the embodiment of the mixer **100** illustrated on **FIG. 1****,** the second summed audio signal passes through a master volume adjustment mechanism **222** to create a master audio signal. In a preferred embodiment of a mixer, a master volume adjustment **222** is coupled with a rotary analog potentiometer **454** and permits a user to control the range of the master audio signal in a range of silent to +15dB.

As described above, the mixer **100,** permits more complete integration of the functionalities of one or more portable media devices with one or more components of a user's media system - by permitting communication between the mixer **100** and the portable media device **114** via the portable media device operating system **112.** Thus, in one embodiment, the master audio signal is processed and transmitted to the portable media device **114** by the interface **250** to be saved by the portable media device **114** as an authenticated recording. Preferably, the portable media device stores the authenticated recording in one of the aforementioned file formats. For example, the portable media device can save the authenticated recording as uncompressed WAV files. In one embodiment, the authenticated recording, for example, can be saved at high or low quality. The high quality audio signal can be a 16-bit stereo, 44.1 KHz signal, with a bit rate of 1211 kb/sec [kilobytes per second] while the low quality audio signal can be a 16-bit monaural, 22.05 KHz signal, with a bit rate of 352 kb/sec, as an example. In another embodiment, the user can set the quality of the recording to other values.

A preferred embodiment of the mixer **100** also includes a mechanism **223** to communicate to the user whether the master audio signal is being saved to the portable media device, and a mechanism **224, 225** to communicate the status of the master audio signal to a user. For example, mechanism **223, 224, 225** can be a light source. In one embodiment, mechanisms **224, 225** can include an LED that lights a first light if the master audio signal is greater than 6dBV (decibels in reference to 1 volt rms [root means squared]), a second light if the master audio signal is greater than 0dBV, a third light if the master audio signal is greater than -6dBV, a fourth light if the master audio signal is greater than -12dBV, a fifth light if the master audio signal is greater than -18dBV, and a sixth light if the master audio signal is greater than -24dBV. In one embodiment, mechanism **223** includes an LED that lights white if a portable media device is disposed within the docking station and lights red if information is communicated from the portable media device **114** to the processor **252,** via the interface **250,** that a signal is being recorded to the portable media device.

To more fully enjoy the capacities of the mixer **100,** including but not limited to the ability of the mixer **100** to permit new and useful integrations of the functionalities of one or more personal media device **114** with one or more components of a user's media system, audio signals saved to the personal media device **114** preferably will be suited to the requirements of the personal media device **114.** Therefore, the mixer **100** preferably includes a signal conditioning mechanism **260** that adjusts the master audio signal to create a conditioned audio signal that is suited to the requirements of the portable media device **114.** For example, in a preferred embodiment, the signal conditioning mechanism **260** attenuates the master audio signal to the nominal input signal level of the portable media device, to create the conditioned audio signal. The 600mVrms figure is somewhat unique to the iPod, and this number is taken from our iPod documentation that is under NDA with apple. Thus, in a preferred embodiment of the mixer **100,** that includes a signal conditioning mechanism **260,** the conditioned audio signal (rather than the master audio signal, as described above) is processed by the processor **252** and transmitted to the portable media device **114** by the interface **250** to be saved by the portable media device **114** as an authenticated recording.

Uniquely, the mixer **100** will permit a user to listen to the master audio signal while the master audio signal (or the conditioned audio signal, as the case may be) is saved to personal media device **114** as a recording. (Similarly, a video signal produced by a mixer can be viewed as it is being recorded to a mixer.) The benefits of this feature will be easily understood by those with ordinary skill in the art. To facilitate this feature of a mixer **100,** the mixer preferably needs one or more outputs, such as output jacks, configured to be coupled to one or more signal output devices, for example, an audio device, such as powered speakers, headphones, a computer, and/or an audio effects processor. For example, in the embodiment illustrated in **FIG. 1** and **FIG. 2****,** the master audio signal is outputted to a headphone out jack **520,** a right monitor output **522** (for example, a ¼ inch jack), and a left monitor output **524** (for example, a ¼ inch jack). A user can listen to the master audio signal, for example, via headphones (not shown) coupled to the headphone out jack 520 and/or speakers (not shown) coupled to the right and left monitor outputs **522, 524.**

The embodiment of the mixer **100** illustrated in **FIG. 1** and **FIG. 2** further includes (a) a headphone volume adjustment mechanism **270** coupled with a control that allows a user to adjust the volume of the master audio signal output to the headphone out jack **520,** and (b) a monitor playback volume adjustment mechanism **272** coupled with a control that allows a user to adjust the volume of the master audio signal output to the left and right monitor outputs **524, 522.** For example, rotary analog potentiometers **526, 528** are coupled with each of the headphone volume adjustment mechanism 2 **70** and the monitor playback volume adjustment mechanism **272** and permit a user to adjust the volume of the master audio signal output to each of the headphone out jack **520** and the right and left monitor outputs **522, 524** in a range of silent to +15dB.

The new and unique integration of the functionalities of one or more portable media device **114** and one or more other components of a user's media system achieved with the mixer **100** is further enhanced when a user elects to input audio signals into the mixer **100** from the portable media device **114** coupled to the mixer **100.** In the manner described above, a user can access the "play" control of the portable media device **114** to select an audio signal to be output to the mixer **100** as a portable media device signal, via the interface **250.**

Preferably, the mixer **100** includes a personal media device input level mechanism **274** to create the modified portable media device signal. Preferably, the personal media device level input mechanism **274** is coupled with a control that allows a user to adjust the modified portable media device signal. For example, a rotary analog potentiometer **530** is coupled with the portable media device level mechanism **274** and permits a user to adjust the modified portable media device signal in a range of silent to +15dB.

As shown on **FIG.** 1, in the embodiment of a mixer illustrated by **FIG. 1****,** if an audio signal is input into the mixer from a portable media device, the modified portable media device signal is summed with the right **208** and left **206** outputs of each channel **102, 104, 106, 108** receiving audio signal inputs, by summing mechanisms **202, 204** to create the first summed audio signal.

An apparatus or system, such as a mixer, can be powered in any appropriate manner known in the art. In the embodiment of the mixer **100** illustrated in **FIG. 1** and **FIG. 2****,** power will be supplied from an external power supply, for example, via an AC power input adapter (not shown) coupled to a power supply (not shown) and coupled with a power jack **600.** The power supply circuitry preferably includes a switch **602** accessible by a user. Furthermore, it is preferable to include a mechanism, such as a light, for example an LED **604,** to indicate to a user whether power is being supplied to the mixer **100.** A power supply circuit **608** will supply power to the components of the mixer, as necessary or appropriate for proper operation of such components, as will be understood by those with ordinary skill in the art.

**FIG. 6** illustrates a non-limiting example of steps a user might take to operate the mixer **100.** To set up the mixer for operation, the user must couple to the mixer those components of his or her media system he or she wishes to use. Thus, the user may connect audio sources to the input jacks of one or more of the first, second, third and fourth channels **620, 622, 624, 626.** To listen to the audio signals produced by the mixer, the user may connect one or more audio devices, such as speakers or headphones, to the output jacks of the mixer **628, 630.** If the user wishes to use a computer as a source of inputting audio signals and/or to receive audio signals from the mixer, the user may connect a computer to the mixer via the USB jack **632.** To integrate the functionalities of a portable media device with those of other components of the user's media system, via the mixer, the user may insert a portable media device into the docking station **634.** If necessary for proper use of a microphone coupled with the mixer, the user may engage the phantom power control **636.** The user can manipulate the audio signals produced by the mixer by adjusting controls for gain, equalization, pan, and/or volume **638, 640, 642, 644, 646.** If desired, the user can engage the control associated with the compressor switch to cause the continuing signal to be the compressed signal, and adjust the compressor functions **648.** If the user has elected to input audio signals to the mixer via the USB port **650,** the user can adjust the USB input control **652** to achieve a desired level of signal input via the USB port and can adjust the audio mix ratio control to achieve the desired balance, as the output of the mixer, between the USB adjusted audio signal and the continuing signal **654.** The user can further manipulate the volume (or level) of the audio signal by adjusting the master volume control. To record the audio signals produced by the mixer to a portable media device, the user may engage the recording menu access control **658** and then select "record" from the menu of the portable media device **660.** In addition, the user can listen to the audio signals produced by the mixer through speakers **668** and/or headphones **670,** adjusting the volume output to the speakers **662** and/or headphones **664** as desired.

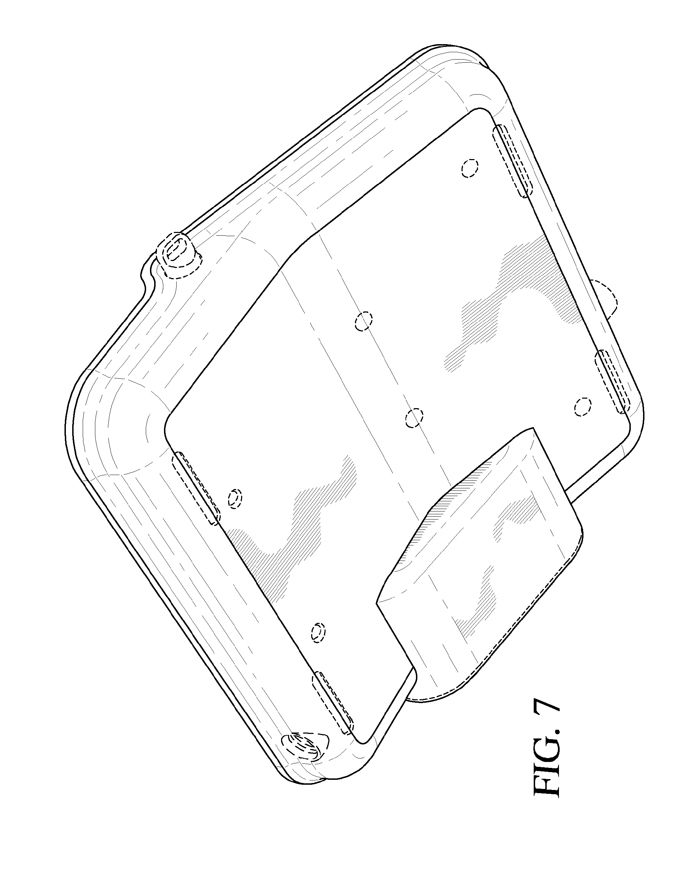

An embodiment of the present invention further comprises a docking station for use with a portable media device. For example, such a docking station can be an integral part of an apparatus for use with a portable media device, such as a mixer. In general, the docking station permits a user to access controls of the portable media device using the preferred operating hand position even if the preferred operating hand position is not also necessary or desirable for gripping the portable media device. A docking station is included in the embodiment of the mixer **100** illustrated in **FIG.** **FIG. 2****,** **FIG. 3****,** **FIG. 7** and **FIG. 9.**

The docking station **499** comprises (a) a receiving port **501** configured to accept the portable media device **114,** which receiving port **501** includes a connector **500** configured to electrically couple with a portable media device, via its bottom port, and provide communication between the portable media device and an apparatus (such as a mixer **100)** associated with the docking station **499,** and (b) a cavity **510** below the receiving port, an opening of which is generally aligned with the front face **580** of a portable media device disposed within the receiving port **501,** and which permits a user of the apparatus to operate the controls (e.g., a flywheel **302)** of the portable media device **114** using the preferred operating hand position.

The receiving port **501** of the docking station **499** further comprises one or more support surfaces for a portable media device disposed within the docking station **499.** For example, in the embodiment of a docking station illustrated in **FIG. 2** and **FIG. 3****,** the receiving port **499** includes a right side wall **502,** a left side wall **504,** a bottom wall **506,** and a back wall **508.**

The cavity **510** is defined by a wall **512,** which is directly or indirectly secured to the receiving port **501** of the docking station **499.** For example, in the embodiment illustrated on **FIG. 2****,** the wall **512** includes a top portion **540** that is an integral part of the back wall **508** of the receiving port **501.** The wall further includes a right side portion **542,** a left side portion **544,** and a bottom position **546,** all of which are integrally connected to one another. Alternatively, or in addition, the wall **512** could be secured to a right side wall **502** and/or a left side wall **504** of the receiving port **501.** Optionally, the cavity **510** may be further defined by a back (not shown). The wall **512** can be continuous and define the entire opening of the cavity **510,** as shown in **FIG. 2****.** However, the wall need not be continuous and may take other shapes, such as an arch.

Optionally, the docking station **499** includes a pad **514,** preferably made of a soft material with a relatively low coefficient of friction, such as felt, and/or one or more removable adaptors **516,** to permit accommodation into the docking station of differently-sized portable media devices.

Prior art mixers typically have a front face, on which most of the controls for operation of the mixer are placed, the plane of which lies substantially parallel to the plane of a substantially horizontal surface on which the mixer is positioned (the "surface plane"), and a rear face, on which most input and output jacks of the mixer are located, the plane of which lies perpendicular to the top face. While the controls are relatively easy to access with this configuration, the input and output jacks positioned on the rear face are difficult to access. Alternatively, both controls and input and output jacks are located on the top face of the mixer. While the input and output jacks are more easily accessed with this configuration, cables and other attachments to the mixer via the input and output jacks can interfere with a user's access and comfortable use of the controls.

An embodiment of a mixer provides a substantial improvement over these prior art mixers. Turning to the embodiment of the mixer **100** illustrated on **FIG. 3****,** the mixer includes a front face **552** lying in plane A **555** and a rear face **554** lying in plane B **553,** wherein the angle of intersection **556** of plane A **555** and plane B **553** is obtuse. Furthermore, plane A is not parallel to the surface plane but, instead, the angle of intersection of the plane of the horizontal surface and plane A is acute. Thus, the controls of a mixer that incorporates this inventive design are angled slightly toward a user, allowing better visibility of the controls and permitting the user to maintain a more comfortable (or ergonomically correct) hand position while operating the controls. Similarly, perhaps offering the most significant improvement over the prior art mixers, the rear face **554** is angled toward a user facing the rear **558** of the mixer. Therefore, the input and output jacks are substantially more visible and accessible than in a mixer in which the plane of the rear face is perpendicular to the surface plane. Furthermore, because the rear face **554** is angled away from front face **552,** cables and other attachments into the input and/or output jacks of the mixer on the rear face are gently directed away from the front face, thereby simplifying management of such cables and other attachments, minimizing the risk such cables and other attachments will interfere with access of controls positioned on the front face **552** of the mixer **100,** and offering a significant improvement over a mixer in which input and output jacks are positioned on the front face.

In a preferred embodiment, the angle between the surface plane and the planes of each of the rear face **554** and the front face **552** of the mixer is between approximately 10 and approximately 15 degrees; more preferably, the angle between the surface plane and the planes **553, 555** of each of the rear face **554** and the front face **552** of the mixer is approximately 12 degrees. Similarly, preferably, the angle of intersection **556** of planes A **555** and B **553** (representing the planes of the front and rear faces of the mixer, respectively) is between approximately 160 and approximately 150 degrees; more preferably, said angle of intersection **556** is approximately 156 degrees.

Housing **101** is preferably made of a material that is tough, hard, and rigid, has good chemical resistance and dimensional stability, exhibits good creep resistance, is relatively strong, and inexpensive. As shown on **FIG. 3** and **FIG. 9,** the mixer **100** optionally includes a lock connector **900** configured to accept a lock, for example, a pad lock and a cable, to secure the mixer **100.** In a preferred embodiment, the lock connector is made of chrome plated cast aluminum.

Although the invention has been described with reference to specific embodiments, it will be understood by those skilled in the art that various changes may be made without departing from the spirit or scope of the invention. Various examples of such changes have been given in the foregoing description. Accordingly, the disclosure of embodiments of the invention is intended to be illustrative of the scope of the invention and is not intended to be limiting. It is intended that the scope of the invention shall be limited only to the extent required by the appended claims. For example, to one of ordinary skill in the art, it will be readily apparent that the system discussed herein may be implemented in a variety of embodiments, and that the foregoing discussion of certain of these embodiments does not necessarily represent a complete description of all possible embodiments. Rather, the detailed description of the drawings, and the drawings themselves, disclose at least one preferred embodiment of the invention, and may disclose alternative embodiments of the invention.

All elements claimed in any particular claim are essential to the invention claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A mixer capable of receiving an input signal from a media system and producing an output signal for a signal output device and a portable media device, the mixer comprising:
an input jack configured to receive and be electrically coupled to a component of the media system, wherein the component is capable of producing the input signal;
an interface configured to (a) electrically couple to the portable media device, and (b) allow the portable media device to record the output signal; and
an output jack configured to receive and be electrically coupled to the signal output device, wherein the signal output device is capable of receiving the output signal.

2. The mixer of claim 1 wherein the mixer is capable of receiving a second input signal from the media system, the mixer further comprising:
a second input jack configured to receive and be electrically coupled to a second component of the media system, wherein the second component is capable of producing the second input signal.

3. The mixer of any of the preceding claims, further comprising:
an authenticated recording feature to allow the portable media device to record the output signal as an authenticated recording.

4. The mixer of any of the preceding claims, further comprising:
a recording menu access control electrically coupled to the interface and configured to allow the portable media device to display automatically a recording menu after a user activates the recording menu access control.

5. The mixer of any of the preceding claims, wherein:
the portable media device comprises a backlight; and
the mixer further comprises a backlight toggle control electrically coupled to the interface and configured to cause the backlight of the portable media device to remain lit while the portable media device is electrically coupled to the interface.

6. The mixer of any of the preceding claims, wherein the mixer is capable of (a) receiving a digital input signal from a computer, and (b) producing a digital output signal for the computer, the mixer further comprising: a second interface configured to electrically couple to the computer, wherein the computer is capable of (a) producing the digital input signal, and (b) receiving the digital output signal.

7. The mixer of claim 1, 2, 3, 4, or 5 wherein output signal is a first analog output signal, and wherein the mixer is further capable of receiving a digital input signal from a computer, the mixer further comprising:
a second interface configured to (a) electrically couple to the computer, wherein the computer is capable of producing the digital input signal, and (b) convert the digital input signal into a second analog output signal; and
a mix ratio mechanism configured to be adjustable by a user and to allow the user create a continuing output signal, wherein the continuing output signal is (1) the first analog output signal, (2) the second analog output signal, or (3) a combination of the first analog output signal and the second analog output signal.

8. The mixer of any of the preceding claims, further comprising a docking station, wherein the docking station comprises:
a receiving port configured to accept the portable media player, the portable media player comprising a front face and a preferred operating hand position, wherein the interface is disposed within the receiving port; and
a cavity adjacent to the receiving port, wherein the cavity comprises an opening, and wherein the opening is configured to allow operation of the portable media device using the preferred operating hand position while the portable media device is located in the receiving port.

9. The mixer of claim 8, wherein the opening of the cavity is aligned with the front face of the portable media device while the portable media device is located in the receiving port.

10. The mixer of any of the preceding claims, wherein the mixer further comprises a lock connector.

11. The mixer of any of the preceding claims, wherein the mixer further comprises:
a front face lying in a first plane; and
a rear face lying in a second plane, wherein the first plane and the second plane intersect at a first angle of intersection, and wherein the first angle of intersection is obtuse.

12. The mixer of claim 11, wherein the first angle of intersection is between approximately 160 degrees and approximately 150 degrees.

13. The mixer of claim 1, 2, 3, 4, 5, 6, 7, 8, 9, or 10 wherein the mixer is configured to lie on a surface lying in a surface plane, wherein the mixer further comprises a front face lying in a first plane, and wherein the first plane and the surface plane intersect at a second angle of intersection, and wherein the second angle of intersection is acute.

14. The mixer of claim 13, wherein the first angle of intersection is between approximately 10 degrees and approximately 15 degrees.

15. An electronic device capable of receiving an input signal from a media system and manipulating the input signal, the electronic device comprising:
a front face lying in a first plane;
a control located on the front face, wherein the control is configured to allow a user of the electronic device to control manipulation of the input signal;
a rear face lying in a second plane, wherein the first plane and the second plane intersect at a first angle of intersection, and wherein the first angle of intersection is obtuse; and
an input jack located on the rear face configured to receive and be electrically coupled to a component of the media system, wherein the component is capable of producing the input signal.

16. An electronic device for use with a portable media device, the electronic device comprising:
an interface configured to electrically couple to the portable media device; and
a docking station, wherein the docking station comprises (a) a receiving port configured to accept the portable media player, the portable media player comprising a front face and a preferred operating hand position, wherein the interface is disposed within the receiving port; and (b) a cavity adjacent to receiving port, wherein the cavity comprises an opening, and wherein the opening is configured to allow operation of the portable media device using the preferred operating hand position while the portable media device is located in the receiving port.

17. An electronic device capable of producing an output signal for a portable media device, the electronic device comprising:
an interface configured to (a) electrically couple to the portable media device, and (b) allow the portable media device to record the output signal;
an authenticated recording feature to allow the portable media device to record the output signal as an authenticated recording; and
a recording menu access control electrically coupled to the interface and configured to cause the portable media device to display automatically a recording menu after a user activates the recording menu access control.

18. An electronic device for a portable media device, wherein the portable media device comprises a backlight, wherein the electronic device comprises:
an interface configured to electrically couple to the portable media device; and
a backlight toggle control electrically coupled to the interface and configured to cause the backlight of the portable media device to remain lit while the portable media device is electrically coupled to the interface.

19. An electronic device for use with a media system, a signal output device, and a portable media device, the electronic device comprising:
an input configured to receive and be electrically coupled to a component of the media system, wherein the component is capable of producing the input signal for the electronic device;
an interface configured to (a) electrically couple to the portable media device, and (b) allow the portable media device to record an output signal from the electronic device; and
an output configured to receive and be electrically coupled to the signal output device, wherein the signal output device is capable of receiving the output signal from the electronic device.

20. A method of using an electronic device for use with a media system, a portable media device, and a signal output device, wherein the electronic device comprises (a) an input configured to receive and be electrically coupled to a component of the media system, wherein the component is capable of producing an input signal for the electronic device, (b) an interface configured to (1) electrically couple to the portable media device, and (2) allow the portable media device to record an output signal from the electronic device, and (c) an output configured to receive and be electrically coupled to the signal output device, wherein the signal output device is capable of receiving an output signal from the electronic device, the method comprising:
providing the electronic device;
providing the component of the media system;
coupling the component of the media system to the input of the electronic device;
causing the component of the media system to produce the input signal;
transmitting the input signal from the component of the media system to the input of the electronic device;
providing the portable media device;
coupling the portable media device to the interface of the electronic device;
using at least a portion of the input signal to create at least a portion of the output signal;
recording the output signal to the portable media device;
providing the signal output device;
coupling the signal output device to the output of the electronic device; and
transmitting the output signal to the signal output device.

21. The method of claim 20, wherein the electronic device further comprises a recording menu access control electrically coupled to the interface and configured to allow the portable media device to display automatically a recording menu after a user activates the recording menu access control, wherein the method further comprises activating the recording menu access control of the electronic device.
